# EUROPÄISCHE PATENTSCHRIFT

(11) **EP 0 529 343 B1**
(45) Veröffentlichungstag und Bekanntmachung des Hinweises auf die Patenterteilung: **29.01.1997**
(21) Anmeldenummer: 92113109.0
(22) Anmeldetag: 31.07.1992
(51) Int. Cl.: H04Q 11/04, H04Q 3/545, H04Q 3/62, H04M 11/02

(54) **Verfahren zur Herstellung einer Verbindung zwischen einem an eine Kommunikationsanlage angeschlossenen Kommunikationsendegerät mit einer Mehrzahl von weiteren Geräten**
Method for establishing communication between a communication terminal, connected to a communication exchange, and a plurality of further terminals
Méthode d'établir une liaison de communication entre un terminal de communication, connectée à un central de communication, et plusieurs terminaux

(30) Priorität: 29.08.1991 DE 4128777
(43) Veröffentlichungstag der Anmeldung: 03.03.1993
(73) Patentinhaber: SIEMENS AKTIENGESELLSCHAFT, 80333 München (DE)
(72) Erfinder: Crevits, Luc, B-8880 Tielt (BE)

(56) Entgegenhaltungen:
- EP-A- 0 025 225
- DE-A- 3 807 358
- GB-A- 2 200 017
- MOTOROLA TECHNICAL DEVELOPMENTS Bd. 13, Juli 1991, SCHAUMBURG, IL, US Seiten 94 - 98 , XP259241 SASUTA 'Unit registration process for specified talkgroup association in a networked trunking system'
- PATHWAYS TO THE INFORMATION SOCIETY September 1982, AMSTERDAM, NL Seiten 19 - 24 ARITA ET AL. 'Future facilities in digital network'

## Beschreibung

Die Erfindung betrifft ein Verfahren zur Herstellung einer Verbindung zwischen einem Ursprungs-Kommunikationsgerät mit einer Mehrzahl von Geräten in Form von separaten Lautsprechern und/oder von Lautsprecher aufweisenden Kommunikationsendgeräten, die jeweils an die programmgesteuerte Kommunikationsanlage angeschlossen sind, zum Zwecke einer von einer Bedienperson des Ursprungs-Kommunikationsgerätes gleichzeitig für diese Mehrzahl von Geräten jeweils zur Ausgabe über den aktivierten Lautsprecher bestimmten Durchsage, wobei die Kommunikationsanlage u. a. gerätebezogene Einheiten zur signalisierungsartindividuellen Anschaltung der Geräte, ein Koppelnetz zum Durchschalten der Verbindungswege und ein zur zentralen Steuerung der Kommunikationsanlage dienendes programmierbares digitales Rechnersystem aufweist, mit mindestens einem Systemspeicher zur Speicherung von Programmodulen und von Daten, und wobei die digitalen Signalisierungsinformationen über einen Signalisierungskanal und die Sprachinformationen über einen Sprachkanal über die Anschlußleitung übermittelt werden.

Die neuzeitlichen digitalen rechnergesteuerten Kommunikationsvermittlungsanlagen lassen den Einsatz von unterschiedlichen Kommunikationsendgeräten zu. Diese können sich also in ihrer Anschlußart und gegebenenfalls in den ihnen zugrundeliegenden Wahlverfahren unterscheiden. So dienen beispielsweise digitale Teilnehmeranschlußbaugruppen dem Anschluß von digitalen Kommunikationsendgeräten. Analoge Kommunikationsendgeräte sind über "analoge Anschlußtechnik" angeschlossen. Die zugrundeliegende Kommunikationsvermittlungsanlage besteht im Prinzip aus einer Vielzahl vermittlungstechnischer Funktionseinheiten und einem programmierbaren digitalen Rechensystem, das diese Funktionseinheiten steuert und alle vermittlungstechnischen Abläufe überwacht. Zu diesem Zweck wird das Rechensystem mit Informationen über den Betriebszustand der Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben.

Derartige Kommunikationsvermittlungsanlagen, insbesondere Fernsprechnebenstellenanlagen, sind neben der eigentlichen Vermittlungssteuerung auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei insbesondere für den Kommunikationsdienst "Sprache" eine große Zahl unterschiedlicher Leistungsmerkmale bekannt ist. Derartige Leistungmerkmale können entweder bei Belegen der Vermittlungseinrichtung oder aber während einer bereits bestehenden Gesprächsverbindung eingeleitet werden. Dies kann beispielsweise durch Wahl bestimmter Kennziffern bzw. Kennziffernkombinationen und/oder durch die Betätigung sogenannter Funktionstasten erfolgen. Zu solchen Leistungsmerkmalen zählen beispielsweise akustische Hinweise für wartende Teilnehmer, die Darstellung von Bedienerhinweisen auf einer optischen Anzeigeeinrichtung und das unmittelbare Ansprechen eines angewählten Teilnehmers. Hierzu hat ein Teilnehmer die Möglichkeit, den am Endgerät des gewünschten Teilnehmers zum Zwecke des Freisprechens neben dem Handapparat vorhandenen Lautsprecher wirksam zu schalten. Es ist vorgesehen, daß eine derartige Wirksamschaltung des vorhandenen Lautsprechers von einem Teilnehmer auch an einer Mehrzahl von angeschlossenen Endgeräten vorgenommen werden kann. Über die aufgebauten Verbindungen kann dann gleichzeitig durch diesen Teilnehmer eine Durchsage an die betreffenden anderen Teilnehmer erfolgen. Eine denkbare Lösungsmöglichkeit besteht darin, daß der Verbindungsaufbau zu den in Frage kommenden Geräten nacheinander erfolgt. Beginnend mit dem ersten der für eine derartige Sammeldurchsage vorgesehenen Geräte wird nach dem Aussenden einer Befehlsinformation für die wirksame Anschaltung des Lautsprechers zunächst das Eintreffen der diese Anschaltung bestätigenden Rückmeldung die Verbindung durchgeschaltet und die Verbindung zum nächsten Gerät der vorgesehenen Gerätereihe aufgebaut. Nach jedem Empfang einer von einem Gerät abgesetzten Rückmeldung wird in gleicher Weise dem nächste Verbindungsaufbau veranlaßt. Dies setzt sich dann sukzessive bis zum letzten für diesen eingeleiteten Durchsagevorgang vorbestimmten Geräte fort. Bei einem solchen denkbaren Ablauf addieren sich die systembedingten Laufzeiten, so daß insbesondere bei einer Vielzahl von anzusprechenden Geräten eine unerwünscht große Zeitspanne beansprucht wird, bis die beabsichtigte Durchsage vorgenommen werden kann. Je nach Anzahl der Geräte ergeben sich zweistellige Sekundenwerte, wobei eine solche Wartezeit von demjenigen, der eine Durchsage beabsichtigt, als unangenehm empfunden werden würde. Darüberhinaus ist ein solcher Ablauf mit verhältnismäßig aufwendigen leistungsmerkmalsspezifischen Programmprozeduren verknüpft, die auch Konsequenzen für die eigentlichen Vermittlungsprozeduren haben.

Der Erfindung liegt die Aufgabe zugrunde, ein Verfahren anzugeben, bei dem mit einfachen Steuerprozeduren eine gleichzeitige Durchsage eines Teilnehmers an eine Vielzahl von Geräten möglich ist und bei dem weiterhin die Zeitspanne zwischen der Aktivierung des Leistungsmerkmals "Sammeldurchsage" und der tatsächlichen Anschaltung der Gesamtheit der anzusprechenden Geräte minimiert ist. Diese Aufgabe wird ausgehend von den im Oberbegriff genannten Merkmalen dadurch gelöst, daß aus der Gruppe der bedarfsweise für eine Durchsage heranzuziehenden und im Systemspeicher abgelegten Geräten aufgrund der am Ursprungs-Kommunikationsgerät durch die Bedienperson vorgenommenen und zumindest den Dienst kennzeichnenden Eingabe zunächst eine festgelegte begrenzte maximale Anzahl von Geräten, für die keine Kommunikationsbeziehung besteht, aufgerufen werden, in dem durch das Rechnersystem die gleichzeitige Übermittlung jeweils einer Befehlsinformation für die Aktivierung des jeweiligen Lautsprechers über den Signalisierungskanal veranlaßt wird, daß jede vorbereitend erfolgte Aktivierung des Lautsprechers durch eine das aufgerufene Gerät kennzeichnende und von ihm ausgesendete Information als Quittungsinformation der Rechnersteuerung zurückgemeldet wird, daß daraufhin die Verbindungsaufbauprozedur eingeleitet und die Verbindung zu dem betreffenden Gerät hergestellt wird, und daß aufgrund jeder empfangenen Quittungsinformation die Ubermittlung der Befehlsinformation zu dem jeweils in der vorgegebenen Reihenfolge nächsten freien Gerät der Gruppe veranlaßt wird, und daß dieses jeweils solange initiiert wird, bis diese maximale Anzahl von aufzurufenden Geräten erneut erreicht ist, daß in dieser Weise diese Aufrufe kontinuierlich fortgesetzt werden und daß aufgrund der Quittungsinformation für das letzte Gerät der Gruppe ein die Bedienperson über die erfolgte Aktivierung aller Geräte der Gruppe informierendes Aufmerksamkeitszeichen zu dem Ursprungs-Kommunikationsgerät übertragen wird.

Die Anzahl derjenigen Geräte, die sich jeweils im Zustand des "Aufrufes" befinden, wird so gewählt, daß im Hinblick auf die übrigen im System ablaufenden Vorgänge eine dynamische Überlastung sicher vermieden wird. Sinnvollerweise wählt man eine solche Anzahl, die für den Verbindungsaufbau insgesamt eine Zeit erfordern, die angenähert derjenigen entspricht, in der eine Quittungsinformation von einem ersten dieser gleichzeitig angesprochenen Geräte empfangen wird. Es ergibt sich somit gegenüber einer seriellen Behandlung der Vorteil, daß sich die Zeitdauer, die notwendig ist, um alle anzusprechenden Geräte zu aktivieren, um das Verhältnis dieser maximalen Geräteanzahl der "Startgruppe" verringert.

Nach einer Weiterbildung des Verfahrens gemäß der Erfindung sind mehrere Gruppen von Geräten vorgesehen, die ihrerseits aus höchstens eine vorgegebene Zahl von Geräten aufweisenden Untergruppen gebildet sind. Diese sind wahlweise in unterschiedlichen sinnvollen Kombinationen zu der jeweiligen Gruppe zusammengefaßt und in dieser vorgenommenen Zuordnung im Systemspeicher abgespeichert. Für eine bedarfsweise Sammeldurchsage sind die nach bestimmten Kriterien einer jeden Gruppe zugeordneten Geräte durch eine jeweils individuell zugeordnete Eingabe von der Bedienperson selektiv aufrufbar. Es können also die vorhandenen Geräte nach unterschiedlichsten Gesichtspunkten zu derartigen Gruppen zusammengefaßt werden. Eine Untergruppe kann demnach in einer oder auch in mehreren Gruppen eingeordnet sein. Die gewählten Zuordnungen sind in beliebiger Mischung möglich und lassen sich problemlos ändern.

Gemäß einer Weiterbildung des erfindungsgemäßen Verfahrens wird durch einen Zähler kontrolliert, daß die maximale Anzahl der jeweils aufgerufenen Geräte nicht überschritten wird. Dieser in einfacher Weise durch eine Software-Lösung zu realisierende Zähler wird mit jedem initiierten Quittungszeichen um einen Zählwert zurückgestellt und mit jeder übermittelten Befehlsinformation um einen Zählwert erhöht, wobei die der vorgegebenen maximalen Anzahl der jeweils angesprochenen Geräte entsprechende Zählerstellung nicht überschritten wird. Mit der Initialisierung des Leistungsmerkmals "Sammeldurchsage" wird der Zähler in die der Startgruppe zahlenmäßig entsprechende Stellung gebracht und das Aussenden der Befehlsinformationen so gesteuert, daß dieser die 'ahl der gleichzeitige Aufrufe bestimmender Wert bis zum Aufruf des letzten Gerätes der Gruppe beibehalten wird.

Ausgehend von einem besonderen Vermittlungszustand, in dem eine ankommende externe Verbindung durch den diese Verbindung abfragenden Teilnehmer in den Wartezustand übergeführt wurde, sind in gleicher Weise durch eine zusätzlich diesen besonderen Vermittlungszustand kennzeichnende gruppenindividuelle Eingabe aus den verschiedenen Gruppen die Geräte jeweils einer Gruppe in der vorstehend genannten Weise aufrufbar. Derjenige Teilnehmer, der sich daraufhin durch Eingabe einer bestimmten Codeinformation als angesprochener Teilnehmer meldet, kann dann unmittelbar in eine Gesprächsverbindung mit dem wartenden Teilnehmer eintreten. Er wird in diesem besonders gekennzeichneten Zustand durch die zentrale Steuerung zu dieser Verbindung durchgeschaltet.

In diesem speziellen Falle werden also die für eine Sammeldurchsage vorgesehenen Prozeduren (Programme) unverändert verwendet, da die entsprechenden Speicherbereiche durch die eingegebene Codeinformation unmittelbar angesteuert werden.

Eine Weiterbildung des Verfahrens sieht vor, daß sowohl die erfolgte Aktivierung eines Lautsprechers in einem Endgerät als auch die Aktivierung aller freien Geräte der jeweils aufgerufenen Gruppe durch ein optisches oder ein akustisches Aufmerksamkeitszeichen angezeigt wird. Die einzelnen Teilnehmer sind also vorab über eine nachfolgende Durchsage informiert und die Bedienperson, die diese Durchsage beabsichtigt, wird darüber unterrichtet, daß mit dieser Durchsage begonnen werden kann.

Die Erfindung wird im folgenden anhand eines schematisch dargestellten Ausführungsbeispiels erläutert.

Dabei zeigen
- FIG 1: ein Blockschaltbild einer Kommunikationsvermittlungsanlage einschließlich dem Kommunikationsendgerätebereich,
- FIG 2: die Steuerstruktur einer digitalen Kommunikationsvermittlungsanlage, die der Durchführung des Verfahrens gemäß der Erfindung dient, und
- FIG 3: ein Ablaufdiagramm der dem Verfahren zugrundeliegenden Meldungen.

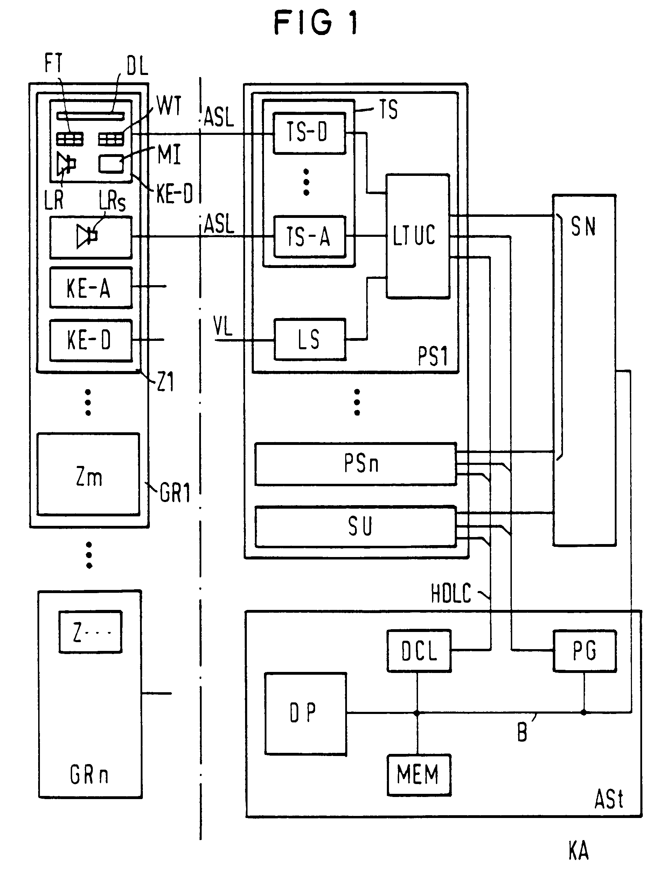

Zentraler Bestandteil der in der FIG 1 schematisch dargestellten digitalen Kommunikationsanlage KA ist ein Koppelfeld SN, über das Kommunikationsendgeräte - schematisch angedeutet durch KE-D und KE-A - miteinander bzw. mit zu einer öffentlichen Vermittlungsanlage oder zu anderen Nebenstellenanlagen führenden Leitungen VL verbindbar sind. Das zentrale Koppelfeld SN steht unter dem Steuereinfluß einer zentralen Anlagensteuerung ASt, das die hierarchisch oberste Strukturebene der Kommunikationsanlage darstellt. Diese Strukturebene wird durch einen zentralen Steuerprozessor DP gebildet, der das Zusammenwirken aller Bausteine und Module der Kommunikationsanlage KA koordiniert. Neben einer takterzeugenden Einrichtung PG ist die Anlagensteuerung weiterhin mit einer vorgeschalteten Zugangssteuerung DCL und einem Speicher MEM ausgestattet. Die Einheit DCL dient als Schnittstelle zur Peripherie, die als 'Master' einer HDLC-Verbindung die Protokollbehandlung auf einem Signalisierungskanal durchführt. In dem Speicher MEM sind beispielsweise die vermittlungstechnische Datenbasis und alle vermittlungstechnisch relevanten Programme und die dazugehörigen Daten gespeichert. Wesentliche Funktionen des zentralen Steuerprozessors DP sind also die Speicherung und anforderungsgerechte Abarbeitung von vermittlungstechnischen Programmen und die Steuerung und Überwachung des lokalen Busses LB, an den peripheriezugewandt die Einheiten DCL und das Koppelfeld SN angeschlossen sind. Zusätzliche übliche Funktionen des zentralen Datenprozessors DP sind beispielsweise betriebstechnische Abwicklungen und sicherheitstechnische Anzeigen.

Wesentlicher Bestandteil der Peripherie sind periphere Schnittstellen PS1...PSn, die teilnehmerbezogene Satzbaugruppen TS und leitungsbezogene Satzbaugruppen LS aufweisen. Diesen peripheren Schnittstellen PS1...PSn ist eine Schnittstellensteuerung LTUC zugeordnet. Diese steuert den Verbindungsaufbau zwischen den Kommunikationsendgeräten KE..., wobei hierfür ein programmtechnisch realisiertes Verbindungsaufbauverfahren vorgesehen ist. In den Schnittstellen PS sind die mit den Kommunikationsendgeräten KE die Signalisierungsprotokolle abwickelnden Verfahren bzw. Programmodule vorwiegend realisiert. Die der Berechtigungsprüfung hinsichtlich Dienste, Leistungsmerkmalen, usw., sowie der Verbindungssteuerung über das digitale zentrale Koppelfeld SN dienenden Verbindungsaufbauverfahren bzw. Programmodule sind in der zentralen Anlagensteuerung ASt implementiert.

Die Peripherie ist ergänzt durch ein Modul SU, das der Versorgung der Kommunikationsvermittlungsanlage KA mit Signalisierungsinformationen und mit während des Haltezustandes von Verbindungen vorgenommenen Musikeinspielungen dient. Dieses Modul SU enthält außerdem signalisierungsunterstützende Einrichtungen sowie auch Testeinrichtungen. Dieses zusätzliche Modul ist in ähnlicher Weise wie die Schnittstellen PS über eine PCM-strukturierte Verbindung sowie über eine zur Übergabe und Aufnahme von Steuerinformationen dienende Übertragungsstrecke angeschaltet. Diese Informationen werden z. B. im standardisierten Übertragungsverfahren HDLC übermittelt.

An die Kommunikationsanlage KA können neben digitalen Kommunikationsendgeräten KE-D auch herkömmliche Endgeräte KE-A mit analoger Übertragung jeweils über eine Anschlußleitung ASL angeschlossen werden. Dies erfolgt für eine jede periphere Schnittstelle PS für die digitalen Kommunikationsendgeräte KE-D über eine die entsprechende digitale Informationsübertragung beherrschende Satzbaugruppe TS-D und für die analogen Kommunikationsendgeräte durch eine entsprechend angepaßte Satzbaugruppe TS-A. Diese sind für jede Schnittstelle mehrfach vorhanden und dienen u. a. dazu, die unterschiedlichen Signalisierungsinformationen von den einzelnen Endgeräten und - bezogen auf die Satzbaugruppe LS - von anderen Netzen auf ein innerhalb der Kommunikationsanlage einheitlich verwendetes Format umzuwandeln. An einer jeden Satzbaugruppe TS sind jeweils eine Mehrzahl von Leitungsanschlüssen zugänglich.

Ein digitales Kommunikationsendgerät, das beispielsweise ausschließlich ein Sprachendgerät darstellt, ist in der Regel mit einem Display DL, einer Wähltastatur WT und einem Satz von Funktionstasten FT ausgestattet. Um ein Freisprechen zu ermöglichen, ist im Endgerät ein Mikrophon MI und ein Lautsprecher LR angeordnet. Neben analogen Fernsprechendgeräten KE-A kann auch anstelle eines solchen Gerätes ein Lautsprecher LRs, der beispielsweise als Raumlautsprecher eingesetzt ist, über eine Anschlußleitung ASL an eine für derartige analoge Anschlüsse zuständige Satzbaugruppe TS-A angeschlossen sein.

Es ist in der Anlage möglich, von einem Bedien- oder Vermittlungsplatz oder auch von einem beliebigen Teilnehmerendgerät aus eine sogenannte Sammeldurchsage vorzunehmen. In einem solchen Fall wird von einer Bedienperson bzw. einem internen Fernsprechteilnehmer die wirksame Anschaltung der in vorab definierten Fernsprechendgeräten vorhandenen Lautsprecher LR als auch von vorhandenen separaten Lautsprechern LRs initiiert. Die jeweils anzusprechenden Geräte in Form von Fernsprechendgeräten oder von separaten Lautsprechern sind in verschiedenen Gruppen GR1...GRn zusammengefaßt. Die definitionsgemäß einer Gruppe zugehörigen Geräte sind selbst wiederum in einzelnen Untergruppen Z1...Zm geordnet. Eine jede dieser Untergruppen umfaßt eine maximale Anzahl von Geräten, beispielsweise von 20 Geräten. Ein Gerät kann - wie bereits erwähnt - z. B. ein digitales Fernsprechendgerät KE-D oder einen separaten Lautsprecher LRs darstellen. Es kann jede Untergruppe einer oder auch mehreren Hauptgruppen GR... zugeordnet werden. Die einzelnen Untergruppen und Hauptgruppen können nach für den Anlagenbetreiber sinnvollen Gesichtspunkten ausgewählt werden. Durch die Gliederung in Untergruppen, aus denen sich dann wiederum eine Hauptgruppe zusammensetzt, sind die Möglichkeiten für das Ansprechen von Teilnehmern im Zusammenhang mit einer Sammeldurchsage sehr variabel zu gestalten. Diese Durchsage kann für eine jede Hauptgruppe durch die Eingabe einer dieser Gruppe jeweils individuell zugeordneten Kennzahl KZ von der Bedienperson initiiert werden.

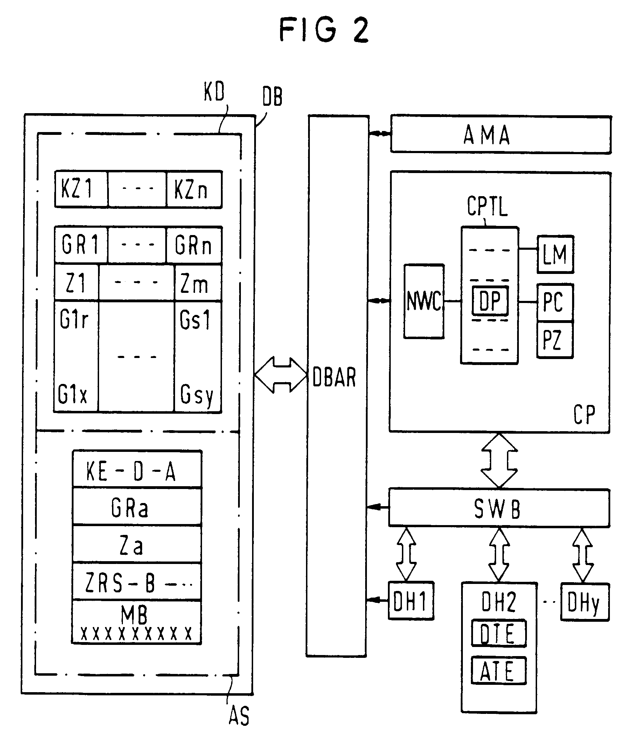

Die kundenspezifisch festgelegten Zuordnungen der einzelnen an die Kommunikationsanlage KA angeschlossenen Geräte KE-D und KE-A zu der jeweiligen Gruppe sind gemäß der FIG 2 in einem die Kundendaten enthaltenen Permanentspeicherbereich KD der Datenbasis DB abgespeichert. In dieser Datenbasis sind auch alle vermittlungstechnisch relevanten Programme gespeichert. Sie kann beispielsweise im Speicher MEM der FIG 1 enthalten sein. Ein weiterer Speicherbereich in der Datenbasis DB kann beispielsweise ein Arbeitsspeicher AS des Rechnersystems ASt der Kommunikationsanlage sein, in dem die im Zusammenhang mit einer Sammeldurchsage entstehenden dynamischen Daten abgespeichert werden.

Die in der FIG 2 dargestellte Steuerstruktur der digitalen Kommunikationsanlage hat einen modularen Charakter und weist zwei hierarchische Ebenen der Programmsteuerung auf. Eine von ihnen dient mittels jeweils an eine Kommunikationsendgeräteart angepaßten Leitungstechnik-Programmodulen DH1, DH2...DHx (Device Handler) der Steuerung peripherer Geräte. Zu diesen zählen nicht nur die an die Peripherie angeschlossenen Kommunikationsendgeräte KE..., sondern auch zentrale schaltungstechnische Einrichtungen, wie Anschaltesätze und Koppelfeld. Jedes dieser Leitungstechnik-Programmodule DH bietet eine systemeinheitliche Schnittstelle zur Vermittlungstechnik-Strukturebene, die im vorliegenden Fall durch ein Vermittlungsprozedur-Programmmodul CP repräsentiert ist. In der Leitungstechnik-Strukturebene DH sind den einzelnen Endgerätearten zugeordnete, sogenannte Leitungstechnik-Programmodule DTE für digitale Endgeräte und ATE für analoge Endgeräte im Programmodul DH2 angedeutet. In der Vermittlungssteuerungs-Strukturebene sind Teilmodule für unterschiedliche Teilaufgaben der Verbindungssteuerung vorgesehen. Der Informationsaustausch zwischen der Leitungstechnik-Strukturebene und der Vermittlungstechnik-Strukturebene erfolgt mittels definierter Meldungen, die über eine Software-Busstruktur SWB übertragen werden. Diese kann als integraler Bestandteil des Betriebssystems des Kommunikationsvermittlungsanlagenrechners angesehen werden. Das Vermittlungssteuerungs-Programmodul CP, die Leitungstechnik-Programmodule DH1, DH2...DHy und der Softwarebus SWB haben mittels Datenbasis-Zugriffsroutinen DBAR Zugang zur Datenbasis DB der gesamten Kommunikationsanlage. Neben dem Vermittlungsprozedur-Programmodul CP sind weitere Module vorgesehen, von denen mit AMA beispielhaft die Betriebstechnik-Programmodule angedeutet sind. Diese dienen zur Abwicklung von betriebstechnischen Aufgaben. Zumindest einem Teil von ihnen ist gleichfalls über definierte Datenbasis-Zugriffsroutinen die Datenbasis DB zugänglich.

Die Leitungstechnik-Programmodule DH1, DH2...DHy sind kommunikationsendgeräteartenspezifisch so ausgebildet, daß sie jeweils das Signalisierungsverfahren und die Benutzeroberfläche der entsprechenden Kommunikationsendgeräteart steuern. Das Vermittlungsprozedur-Programmodul CP ist kommunikationsendgeräteartenunabhängig und kommunikationsdiensteunabhängig derartig strukturiert, daß es den maximalen Funktionsumfang der peripheren Geräte und Einrichtungen steuerungstechnisch beherrscht. Die Aufgaben des Vermittlungsprozedur-Programmoduls CP umfassen also die für die Steuerung des Verbindungsaufbaus und -abbaus notwendigen Teilprozesse der gesamten Vermittlungsprozedur. So werden z. B. Berechtigungen geprüft und Wahlkontrollen durchgeführt. Es erfolgt auch eine Signalisierung von vermittlungstechnischen Zuständen zwischen den Kommunikationsendgeräten und es ist ein Aktivieren und Deaktivieren von Vermittlungstechnik-Leistungsmerkmalen aus den verschiedenen vermittlungstechnischen Zuständen heraus durchführbar.

Wesentlicher Bestandteil der Vermittlungstechnik-Strukturebene CP ist das Vermittlungsprozedur-Programmodul CPTL (Call Processing Trunk Line), das wiederum in unterschiedliche Teilmodule aufgeteilt ist. Die vermittlungstechnischen Steuerprozeduren werden von einer in der FIG 2 innerhalb der Einheit CPTL schematisch dargestellten Kommunikationsanlagensteuerung DP durchgeführt. Stellvertretend für die in der Anlage vorgesehenen Leistungsmerkmal-Programmodule ist das Modul LM und das im Zusammenhang mit einer Sammeldurchsage vorgesehene Modul PC gezeigt. Zu den Leistungsmerkmal-Programmodulen ist auch ein Netzwerksteuer-Programmodul NWC zu zählen, mit dem die gesamte logische Verbindungsspeichersteuerung und die Steuerung des Koppelfeldes SN realisiert wird.

Die prinzipielle Struktur der bei einem durch das Programmodul PC abzuwickelnden Sammeldurchsage-Vorgang zugeordneten permanenten und dynamischen Daten ist in der Datenbasis DB angedeutet. In dem Teilbereich KD handelt es sich um diejenigen permanenten Daten, die während eines durch ein Kommunikationsendgerät initiierten Sammeldurchsage abgefragt und zumindest teilweise in den Arbeitsspeicherbereich AS der Datenbasis DB übernommen werden.

Die Permanentspeicher KD der Datenbasis DB enthalten neben den übrigen Systemkonfigurationsdaten auch die im Zusammenhang mit einer durchzuführenden Sammeldurchsage relevanten Daten. Es ist dort abgespeichert, welches Kennzeichen KZ jeweils einer der nach bestimmten Gesichtspunkten aus den Untergruppen gebildeten Hauptgruppen GR1...GRn zugeordnet ist. Weiterhin sind diejenigen Untergruppen Z... abgespeichert, die jeweils zu einer Hauptgruppe GR gehören. Es können beispielsweise acht Hauptgruppen und acht Untergruppen gebildet sein. Es kann dabei eine der Untergruppen Z1...Zm einer oder auch mehreren Hauptgruppen zugeordnet werden. Für jede der einzelnen Untergruppen Z1...Zm ist eine Liste derjenigen Geräte G... abgespeichert, die jeweils zu dieser Untergruppe Z... gehören. So sollen beispielsweise die Geräte G1r...G1x die Untergruppe Z1 bilden. Für "x" kann beispielsweise ein maximaler Wert von "20" festgelegt sein. Für die übrigen Untergruppen sind dann jeweils die zugehörigen Geräte gleichfalls listenmäßig abgelegt. So gehören z. B. zur Untergruppe Zm die Geräte Gs1...Gsy, wobei "y" beispielsweise Werte von eins bis 20 annehmen kann. In einer Hauptgruppe könnten also in dem gewählten Ausführungsbeispiel mit acht Untergruppen und maximal 20 Geräten für jede dieser Untergruppen in einer Hauptgruppe maximal insgesamt 160 Geräte zusammengefaßt sein.

Grundsätzlich wird bei jedem Einleiten einer Verbindungsaufbauprozedur durch ein Kommunikationsendgerät in der permanente Daten speichernden Datenbasis ein diesem Gerät zugeordneter Speicherbereich abgefragt. Im Rahmen dieser Abfrage wird das rufende Kommunikationsendgerät eindeutig identifiziert. Die darin abgespeicherten Dienste und Berechtigungen hinsichtlich benutzbarer Leistungsmerkmale werden gelesen und gegebenenfalls in einem dynamische Daten speichernden Speicherbereich der Datenbasis gespeichert. Weiterhin werden die darin enthaltenen physikalischen Funktionen, wie z. B. die verwendeten Endgeräteschnittstellen, gelesen und gespeichert. Diese Daten werden im Laufe des Verbindungsaufbaus und bei Einleiten vermittlungstechnischer Prozeduren bewertet bzw. abgefragt.

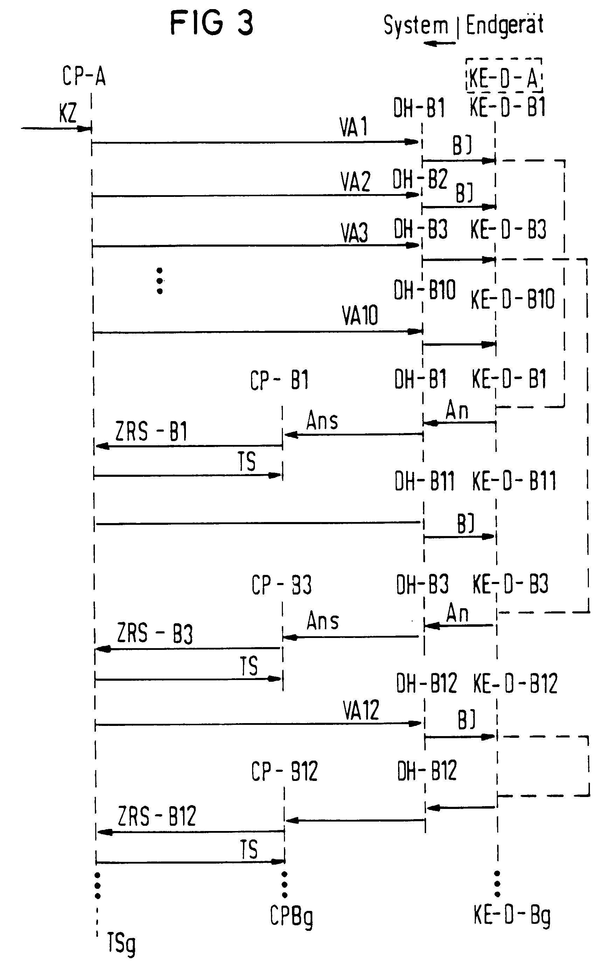

Beabsichtigt nun ein Teilnehmer, eine Sammeldurchsage zu machen, so wählt er die Kennzahl KZ... der von ihm hierzu vorgesehenen Hauptgruppe. Diese Kennzahl kann sowohl die Gruppe als auch das Leistungsmerkmal "Sammeldurchsage" definieren. Es könnte auch hierfür die Kombination aus der Betätigung einer Funktionstaste und der nachfolgenden Einwahl einer Kennzahl vorgesehen sein. Es wird daraufhin der dem Leistungsmerkmal "Sammeldurchsage" zugeordnete Speicherbereich abgefragt. Aufgrund der im Speicherbereich AS eingeschriebenen Informationen erkennt die Steuerung, welche Untergruppen und welche Geräte innerhalb dieser Untergruppen angesprochen werden müssen. Im Zusammenwirken mit dem Netzwerksteuer-Programmodul NWC werden nun Verbindungen zwischen dem eine Sammeldurchsage beabsichtigenden Teilnehmer KE-D-A und den festgelegten Geräten aufgebaut. Wie dem Ablaufdiagramm der Meldungen nach der FIG 3 zu entnehmen ist, wird durch das der Vermittlungssteuerungs-Strukturebene CP zugeordnete Teilmodul CP-A im Ausführungsbeispiel für die ersten zehn Geräte der durch die Kennzahl ausgewählten Gruppe GR die gleichzeitige Absendung einer Befehlsinformation BI für die wirksame Anschaltung des jeweiligen Lautsprechers im digitalen Endgerät KE-D bzw. die unmittelbare Verbindungsherstellung zu dem als analoges Endgerät KE-A definierten separaten Lautsprecher LRs KE-A veranlaßt. Die Anzahl der gleichzeitig abgeschickten Befehlsinformationen ist so zu wählen, daß das System nicht überlastet ist. Es können z. B. zehn Geräte gleichzeitig einen Aufruf erhalten. Die Untergruppen, zu denen die jeweils aktuell aufgerufenen Geräte gehören, werden ebenfalls im Speicherbereich AS als entsprechende Information Za abgespeichert. Im Zusammenwirken mit dem bei einer Durchsage herangezogenen Programmodul PC wird ein ebenfalls als Software-Lösung realisierter Zähler PZ entsprechend den gleichzeitig ausgesendeten Aufrufen VA auf den für das Ausführungsbeispiel angenommen Wert "10" gestellt. Bei den jeweils durch die Meldung VA1...VA10 aufgerufenen zehn Geräten handelt es sich um Geräte, die bei der entsprechenden Prüfung durch die Vermittlungssteuerung des Systems als sich im "Freizustand" befindlich erkannt wurden.

Gibt ein aufgerufenes Gerät eine Rückmeldung An an das entsprechende Modul der Leitungstechnik-Strukturebene DH, so wird durch die dort generierte Meldung Ans in der Vermittlungssteuerungs-strukturebene eine Quittungsinformation ZRS generiert. Aufgrund jeder Quittungsinformation wird für ein digitales Endgerät die Verbindungsaufbauprozedur eingeleitet und die Verbindung hergestellt. Bei einem separaten Lautsprecher als aufgerufenes Gerät wird die Quittungsinformation mit der Verbindungsherstellung in der leitungstechnischen Strukturebene DH erzeugt. Weiterhin wird mit jeder Quittungsinformation der Zähler PZ um einen Zählwert zurückgestellt. Trifft also beispielsweise vom Gerät KE-D-B1 als erstes eine Rückinformation ein, so wird daraus die Quittungsinformation ZRS...B1 gebildet. Durch das Teilmodul CP-A, das für den eine Durchsage beabsichtigenden Teilnehmer A zuständig ist, wird die Aussendung eines Tonsignals TS an das jeweils aufgerufene digitale Endgerät veranlaßt, durch das der betreffende Teilnehmer über die erfolgte Anschaltung des Lautsprechers im Endgerät informiert wird. Zugleich wird in der beschriebenen Weise eine Befehlsinformation BI an das in der aktuell angesprochenen Zone nächste freie Gerät KE-D-Bll ausgesendet. Gleichzeitig erfolgt eine Erhöhung des Zählerwertes um den Wert "1", so daß die Zahl "10" für die gleichzeitig aufgerufenen Geräte erneut erreicht ist. Mit jedem aufgrund einer Rückinformation eines Gerätes generierten weiteren Quittungsinformation ZRS wird in der beschriebenen Weise jeweils das nächste freie Gerät aufgefordert, die wirksame Anschaltung des Lautsprechers vorzunehmen. Aufgrund anderer im System ablaufender Vorgänge kann der Fall eintreten, daß das Eintreffen der Rückinformation zunächst in einer Warteschlange abgespeichert wird, so daß mit der Generierung der daraus abgeleiteten Quittungsinformationen ZRS eine dieser Anzahl von Quittungsinformationen entsprechende Anzahl von Befehlsinformationen BI gleichzeitig an weitere freie Geräte ausgesendet werden. Durch die entsprechende Inkrementierung bzw. Dekrementierung des Zählers PZ ist jedoch sichergestellt, daß die maximal vorgesehene Anzahl von gleichzeitig bestehenden Aufrufen - im Ausführungsbeispiel zehn Aufrufe - eingehalten wird. Innerhalb dieser festgelegten Konstellation von jeweils zehn aufgerufenen Geräten wird dieser geschilderte Ablauf bis zum Aufruf des letzten freien Gerätes der durch die vorgenommene Kennzahleingabe definierten Gruppe fortgesetzt. Nach dem durch die Rückinformation dieses letzten Gerätes KE-D-Bg bewirkten Quittungszeichen wird zu dem Ursprungs-Endgerät KE-D-A ein Aufmerksamkeitszeichen, beispielsweise in Form eines bestimmten Hörtones Tsg, übermittelt. Damit wird dann der betreffende Teilnehmer informiert, daß die beabsichtigte Durchsage erfolgen kann. Über den jeweils aktivierten Lautsprecher betrifft dann diese Durchsage insgesamt diejenigen Geräte, die durch die mit der eingewählten Kennzahl definierte Gruppe GR... repräsentiert sind.

Wie bereits erwähnt, werden mit Hilfe der Datenbasis-Zugriffsprozeduren die Zieladreßdaten derjenigen Geräte ermittelt, die über die gruppenspezifische Kennzahl KZ für eine Sammeldurchsage vorgesehen sind. In einer Tabelle des Arbeitsspeicherbereiches AS der Datenbasis DB gemäß FIG 2 werden nun im Rahmen eines solchen Durchsage-Vorgangs die Kennungen ZRS-B derjenigen Geräte eingetragen, von denen eine Rückinformation über die erfolgte Anschaltung des jeweiligen Lautsprechers eingetroffen ist. Neben der notwendigen Generierung der weiteren Aufrufe kann dadurch der Zeitpunkt ermittelt werden, zu dem eine Aktivierung der Lautsprecher jeweils aller angesprochenen Geräte KE-D-B1...KE-D-Bg erfolgt ist. Durch die im Speicherbereich KD der Datenbasis gespeicherten permanenten Daten kann ein schnelles Zuordnen der durch die eingewählte Kennzahl definierten Gruppeninformation zu den jeweils aufzubauenden Verbindungen erfolgen.

Die insgesamt angesprochenen Untergruppen Z... sind im Arbeitsspeicher AS (FIG 2) durch ein entsprechendes Markierungsbit MB gekennzeichnet.

In einer Kommunikationsanlage besteht die Möglichkeit, eine ankommende Gesprächsverbindung, die beispielsweise am Vermittlungsplatz abgefragt wird, in eine Halteposition zu stellen. Es ist nun möglich, den für dieses Gespräch gewünschten Gesprächspartner mittels einer Sammeldurchsage anzusprechen. Zur Kennzeichnung dieses besonderen Vermittlungszustandes ist je nach anzusprechender Gruppe wiederum eine spezielle Kennzahl einzuwählen, die sich von der für eine normale Durchsage festgelegten Kennzahl unterscheidet. Diese Kennzahlen sind in nicht dargestellter Weise in der Datenbasis als Information abgelegt. Die jeweils zugeordneten Gruppen können mit den für die normale Durchsage bestimmten Gruppen GR übereinstimmen. In einem solchen Fall greift also die Vermittlungssteuerung über die Datenbasis-Zugriffsprozeduren auf die gleichen abgespeicherten Listen zu. Es wird also die angesprochene Gruppe von Teilnehmern mit der Durchsage darüber informiert, daß für einen bestimmten Teilnehmer eine Gesprächsverbindung in den Haltezustand gelegt wurde. Wählt der betreffende Teilnehmer eine Kennzahl und anschließend eine die Warteposition definierende Zahl, die ihm beispielsweise auf dem Display seines Endgerätes angezeigt wird, so wird durch die Vermittlungssteuerung die Zuschaltung dieses Teilnehmers auf die wartende Verbindung veranlaßt.

## Patentansprüche

1. Verfahren zur Herstellung einer Verbindung zwischen einem Ursprungs-Kommunikationsendgerät mit einer Mehrzahl von Geräten in Form von separaten Lautsprechern (LRₛ) und/oder von Lautsprecher aufweisenden Kommunikationsendgeräten (KE-A, KE-D), die jeweils an eine programmgesteuerte Kommunikationsanlage (KA) angeschlossen sind, zum Zwecke einer von einer Bedienperson des Ursprungs-Kommunikationsgerätes gleichzeitig für diese Mehrzahl von Geräten jeweils zur Ausgabe über den aktivierten Lautsprecher bestimmten Durchsage, wobei die Kommunikationsanlage u. a. gerätebezogene Einheiten zur signalisierungsartindividuellen Anschaltung der Geräte, ein Koppelnetz (SN) zum Durchschalten der Verbindungswege und ein zur zentralen Steuerung der Kommunikationsanlage dienendes programmierbares digitales Rechnersystem (ASt) aufweist, mit mindestens einem Systemspeicher (MEM) zur Speicherung von Programmodulen und von Daten, und wobei die digitalen Signalisierungsinformationen über einen Signalisierungskanal und die Sprachinformationen über einen Sprachkanal über die Anschlußleitung (ASL) übermittelt werden,
**dadurch gekennzeichnet,**
daß aus der Gruppe (GR) der bedarfsweise für eine Durchsage heranzuziehenden und im Systemspeicher (KD) abgespeicherten Geräte (KE-D) aufgrund der am Ursprungs-Kommunikationsendgerät durch die Bedienperson vorgenommenen und zumindest den Dienst kennzeichnenden Eingabe zunächst eine festgelegte begrenzte maximale Anzahl von Geräten, für die keine Kommunikationsbeziehung besteht, aufgerufen werden, indem durch das Rechnersystem (ASt) die gleichzeitige Übermittlung jeweils einer Befehlsinformation (BI) für die Aktivierung des jeweiligen Lautsprechers (LR bzw. LRs) über den Signalisierungskanal veranlaßt wird, daß jede vorbereitend erfolgte Aktivierung des Lautsprechers durch eine das aufgerufene Gerät (KE-D-B1...Bg) kennzeichnende und von ihm initiierte Quittungsinformation (ZRS) der Rechnersteuerung zurückgemeldet wird, daß daraufhin die Verbindungsaufbauprozedur eingeleitet und die Verbindung zu dem betreffenden Gerät hergestellt wird, und daß aufgrund jeder empfangenen Quittungsinformation die Übermittlung der Befehlsinformation (BI) zu dem jeweils in der vorgegebenen Reihenfolge nächsten freien Gerät der Gruppe (GR) veranlaßt wird, und daß dieses jeweils so lange initiiert wird, bis diese maximale Anzahl, z. B. zehn, von aufgerufenen Geräten erneut erreicht ist, daß in dieser Weise diese Aufrufe kontinuierlich fortgesetzt werden und daß aufgrund der Quittungsinformation für das letzte Gerät (KE-D-Bg) der Gruppe (GR) ein die Bedienperson über die erfolgte Aktivierung aller Geräte dieser Gruppe informierendes Aufmerksamkeitszeichen zu dem Ursprungs-Kommunikationsgerät (KE-D-A) übertragen und dort angezeigt wird.

2. Verfahren nach Anspruch 1,
**dadurch gekennzeichnet,**
daß mehrere Gruppen (GR1...GRn) von Geräten vorgesehen sind, die ihrerseits aus Untergruppen (Z1...Zm) gebildet sind, die höchstens eine vorgegebene Anzahl von Geräten aufweisen und die wahlweise in unterschiedlichen zweckmäßigen Kombinationen zu der jeweiligen Gruppe zusammengefaßt und in der vorgenommenen Zuordnung abgespeichert (KD) sind und daß jede Gruppe für die bedarfsweise Durchsage durch eine ihr individuell zugeordnete Kennzahleingabe KZ selektiv aufrufbar ist.

3. Verfahren nach Anspruch 1,
**dadurch gekennzeichnet,**
daß die Nichtüberschreitung der maximalen Anzahl der jeweils aufgerufenen Geräte durch einen Zähler (PZ) kontrolliert wird, der mit jedem initiierten Quittungszeichen um einen Zählwert zurückgestellt und mit jeder übermittelten Befehlsinformation bzw. mit jedem Aufruf um einen Zählwert erhöht wird, wobei die dieser maximalen Anzahl entsprechende Zählerstellung, z. B. zehn, nicht überschritten wird.

4. Verfahren nach einem der Ansprüche 1 bis 3,
**dadurch gekennzeichnet,**
daß ausgehend von dem besonderen Vermittlungszustand, in dem eine ankommende externe Verbindung durch den diese Verbindung abfragenden Teilnehmer, z. B. Vermittlungsplatz, in den Wartezustand übergeführt wurde, in gleicher Weise durch eine zusätzlich diesen besonderen Zustand kennzeichnende individuelle Kennzahleingabe die Geräte einer Gruppe in der voranstehend genannten Weise aufrufbar sind, daß derjenige Teilnehmer, der sich daraufhin durch Eingabe einer bestimmten Codeinformation meldet, auf die wartende Gesprächsverbindung aufgeschaltet wird.

5. Verfahren nach Anspruch 1,
**dadurch gekennzeichnet,**
daß die erfolgte Aktivierung eines Lautsprechers nach Empfang des Quittungszeichens durch ein zu dem betreffenden Gerät übermittelten optischen oder akustischen Aufmerksamkeitszeichens angezeigt wird.

6. Verfahren nach Anspruch 1,
**dadurch gekennzeichnet,**
daß nach Aktivierung aller freien Geräte der jeweils aufgerufenen Gruppe dem Endgerät der eine Sammeldurchsage beabsichtigenden Bedienperson ein optisches oder akustisches Aufmerksamkeitszeichen übermittelt wird.

## Claims

1. Method for establishing a connection between an originating communication terminal device having a plurality of devices in the form of separate loudspeakers (LRₛ) and/or of communication terminals (KE-A, KE-D) which have loudspeakers and which are each connected to a programme-controlled communication system (KA), for the purpose of an announcement by an operator of the originating communication device simultaneously for this plurality of devices, to be output in each case via the activated loudspeaker, the communication system having, inter alia, device-specific units for switching on the devices in a signalling-method-specific manner, a switching matrix (SN) for connecting through the connection paths and a programmable digital computer system (AST) which serves for centralized control of the communication system, having at least one system memory (MEM) for storing programme modules and data, and the digital signalling information being conveyed by means of a signalling channel, and the voice information being conveyed by means of a voice channel, via the connecting line (ASL), characterized in that, from the group (GR) of devices (KE-D) which are to be used as required for a announcement and are stored in the system memory (KD), initially a fixed, limited maximum number of devices for which there is no communication relationship are called up on the basis of the input which is performed at the originating communication terminal device by the operator and identifies at least the service, in that the simultaneous transmission of in each case one item of instruction information (BI) for the activation of the respective loudspeaker (LR or LRs) via the signalling channel is brought about by the computer system (ASt), in that each activation of the loudspeaker which has taken place in a preparatory manner is reported back by an item of acknowledgement information (ZRS) of the computer controller, which information identifies the called-up device (KE-D-B1...Bg) and is initiated by it, in that, in response, the connection set-up procedure is initiated and the connection to the respective device is established, and in that, on the basis of each received item of acknowledgement information, the transmission of the instruction information (BI) to the respective next free device in the group (GR) in the prescribed order is brought about, and in that this is initiated in each case until this maximum number, e.g. 10, of called-up devices has been reached again, in that, in this way, the set-ups are continuously continued, and in that, on the basis of the acknowledgement information for the last device (KE-D-Bg) of the group (GR), an attention signal informing the operator that the activation of all the devices of this group has taken place, is transmitted to the originating communication terminal device (KE-D-A) and displayed there.

2. Method according to Claim 1, characterized in that a plurality of groups (GR1...GRn) of devices is provided, which groups (GR1...GRn) themselves are each formed from subgroups (Z1...Zm) which have at most a prescribed number of devices and which are optionally combined in different expedient combinations to form the respective group and stored (KD) in the assignment which is made, and in that each group for the announcement as required can be called up selectively by means of an identification entry KZ individually assigned thereto.

3. Method according to Claim 1, characterized in that the fact that the maximum number of devices called-up in each case is not exceeded is monitored by a counter (PZ) which is decremented by one counting value with every initiated acknowledgement signal and incremented by one counting value with each transmitted item of instruction information and/or with each call-up, the counter reading, e.g. 10, which corresponds to this maximum number not being exceeded.

4. Method according to one of Claims 1 to 3, characterized in that, on the basis of the particular switched state in which an incoming, external connection has been changed to the waiting state by the subscriber, e.g. operator's console, interrogating this connection, the devices of a group can be called up in the same way by means of an additional individual identification entry identifying this particular state, in the way described above, in that that subscriber which, in response, replies by entering a specific item of code information, is connected to the waiting call connection.

5. Method according to Claim 1, characterized in that the activation of a loudspeaker which has taken place after the reception of the acknowledgement signal is indicated by a visual or audible attention signal which is transmitted to the respective device.

6. Method according to Claim 1, characterized in that, after activation of all the free devices of the respectively called-up group, a visual or audible attention signal is transmitted to the terminal device of the operator intending to make a group announcement.

## Revendications

1. Méthode pour établir une liaison de communication entre un appareil de communication de départ et plusieurs appareils sous la forme de haut-parleurs séparés (LRs) et/ou de terminaux de communication (KE-A-, KE-B) présentant des haut-parleurs, qui sont respectivement branchés à un central de communication (KA) commandé par programme, à des fins de transmettre une annonce d'un opérateur de l'appareil de communication de départ destinée simultanément à cette multitude d'appareils pour émission à chaque fois par les haut-parleurs activés, le central de communication comprenant entre autres des unités relatives aux appareils pour allumer les appareils individuellement selon la nature de la signalisation, un réseau de connexion (SN) pour interconnexion des voies de liaison et un système informatisé numérique programmable (ASt) servant à la commande centrale du central de communication, avec au moins une mémoire système (MEM) destinée à mémoriser des modules de programmes et des données et les informations de signalisation numériques étant transmises par un canal de signalisation et les informations vocales par une voie vocale à travers la ligne d'abonné (ASL) caractérisée en ce que du groupe (GR) des appareils (KE-D) qu'on utilise en cas de besoin pour une annonce et qui sont mémorisés dans la mémoire système (KD), on fait appel en raison d'une entrée caractérisant au moins la facilité et réalisée par l'opérateur sur le terminal de communication de départ, tout d'abord à un nombre maximal limité déterminé d'appareils pour lesquels il n'existe pas de rapport de communication, en déclenchant par le système informatique (ASt) la transmission simultanée dans chaque cas d'une information de commande (BI) pour activer le haut-parleur respectif (LR ou LRs) par le canal de signalisation, en ce que chaque activation préliminairement effectuée du haut-parleur est annoncée en retour à la commande informatisée par une information d'accusé de réception (ZRS) caractérisant l'appareil appelé (KE-D-BI...Bg) et émise par lui, en ce que ensuite la procédure d'établissement de liaison est enclenchée et la liaison établie avec l'appareil en question, et en ce que en raison de chaque information d'accusé de réception reçue, la transmission de l'information de commande (BI) est déclenchée à chaque fois vers le prochain appareil libre du groupe GR selon l'ordre prédéterminé, et en ce que ceci est à chaque fois initié jusqu'à ce que ce nombre maximal d'appareils à appeler, par ex. dix, soit à nouveau atteint, en ce que de cette manière, ces appels se poursuivent en continu et en ce que en raison de l'information d'accusé de réception pour le dernier appareil (KE-D-Bg) du groupe (GR), un signe d'avertissement informant l'opérateur de l'activation effectuée de tous les appareils de ce groupe est transmis à l'appareil de communication de départ (KE-D-A) et est affiché à cet endroit.

2. Méthode selon la revendication 1 caractérisée en ce que plusieurs groupes (GR1...GRn) d'appareils sont prévus, constitués à leur tour de sous-groupes (Z1...Zm) qui présentent au maximum un nombre prédéterminé d'appareils et qui sont facultativement rassemblés en différentes combinaisons appropriées dans le groupe respectif et mémorisés selon l'affectation prédéterminée (KD) et en ce que chaque groupe peut être sélectivement appelé pour l'annonce selon le besoin par l'entrée d'un nombre caractéristique KZ qui lui est affecté individuellement.

3. Méthode selon la revendication 1 caractérisée en ce que le non dépassement du nombre maximal des appareils respectivement appelés est contrôlé par un compteur (PZ) qui est décalé d'une valeur numérique avec chaque signe d'accusé de réception initié et augmenté d'une valeur numérique avec chaque information de commande transmise resp. avec chaque appel, la position du compteur correspondant à ce nombre maximal, par ex. dix, n'étant pas dépassée.

4. Méthode selon les revendications 1 à 3 caractérisée en ce qu'à partir de l'état de commutation particulier, dans lequel une liaison externe arrivant a été transférée en état d'attente par l'abonné appelant cette liaison, par ex. position d'opérateur, les appareils d'un groupe peuvent être appelés de la manière préalablement citée par l'entrée d'un nombre caractéristique individuel caractérisant en outre cet état particulier de sorte que l'abonné qui s'annonce ensuite par l'entrée d'une certaine information codée, est connecté sur l'appel en attente.

5. Méthode selon la revendication 1 caractérisée en ce que l'activation effectuée d'un haut-parleur après réception de l'accusé de réception est affichée par un signe d'avertissement optique ou acoustique transmis à l'appareil concerné.

6. Méthode selon la revendication 1 caractérisée en ce qu'après activation de tous les appareils libres du groupe respectivement appelé, un signe d'avertissement optique ou acoustique est transmis au terminal de l'opérateur envisageant d'envoyer une annonce collective.
